Europäisches Patentamt

European Patent Office

Office européen des brevets

(19)

(11) Veröffentlichungsnummer: **0 145 920**
**B1**

(12) **EUROPÄISCHE PATENTSCHRIFT**

(45) Veröffentlichungstag der Patentschrifft:
07.02.90

(21) Anmeldenummer: 84113257.4

(22) Anmeldetag: 03.11.84

(51) Int. Cl. 5: **F 23 C 11/00, F 23 C 6/04**

(54) Verbrennungsvorrichtung.

(30) Priorität: 03.11.83 DE 3339741
09.05.84 DE 8414125 U

(43) Veröffentlichungstag der Anmeldung:
26.06.85 Patentblatt 85/26

(45) Bekanntmachung des Hinweises auf die Patenterteilung:
07.02.90 Patentblatt 90/06

(84) Bennante Vertragsstaaten:
AT BE CH FR GB IT LI LU NL SE

(56) Entgegenhaltungen:
DE-A-2 307 259
DE-A-2 723 685
DE-A-3 025 338
DE-B-2 260 586
FR-A-2 347 430
FR-A-2 347 431
US-A-2 357 673

(73) Patentinhaber: EVK Energietechnik Verfahrenstechnik Umwelttechnik Dr. Ing. C. Koch
Mühlweg 13
D-8570 Pegnitz (DE)

(72) Erfinder: Koch, Christian, Dr.-Ing.
Würzburger Ring 33
D-8520 Erlangen (DE)
Erfinder: Erdlen, Erwin
Vorjurastrasse 139
D-8500 Nürnberg (DE)

(74) Vertreter: Patentanwälte Czowalla . Matschkur + Partner
Dr.-Kurt-Schumacher-Strasse 23 Postfach 9109
D-8500 Nürnberg 11 (DE)

EP 0 145 920 B1

## Beschreibung

Die Erfindung bezieht sich auf ein Brennwertgerät für Kohlenwasserstoffe mit einem mit einer katalytischen Oberflächenbeschichtung versehenen, von einem Kohlenwasserstoff-Luft-Gemisch durchsetzten, porösen Keramikkörper, insbesondere in Form einer keramischen Lochplatte, sowie einem ausgangsseitig angeordneten Wärmetauscher, wobei dem katalytisch beschichteten Keramikkörper ein katalytisch unbeschichteter Keramikkörper als Flammensperre vorgeschaltet ist, die unter Verhinderung einer Verbrennung des Kohlenwasserstoff-Luft-Gemisches vor der Oberfläche des Keramikkörpers eine weitestgehende, flammenlose Umsetzung des Gemisches bewirkt.

Zur Realisierung der Flammensperre sind bereits Kombinationen aus einer Reihe von Merkmalen vorgeschlagen worden, die unter anderem einen Eingangs-Wärmetauscher, ein engmaschiges Metallgitter sowie zusätzliche keramische Lochplatten, jedoch ohne katalytische Oberflächenbeschichtung, umfassen. Jedes dieser Merkmale bewirkt eine Absicherung gegen die unerwünschte Umsetzung des Brennstoffs in einer Flamme und trägt dazu bei, einen immer größeren Anteil der Umsetzung des Brennstoffes mit dem Luftsauerstoff im Innern des katalytisch beschichteten Keramikkörpers stattfinden zu lassen. Diese katalytische Umsetzung ist nicht nur ca. hundertmal so schnell wie der Verbrennungsvorgang in der offenen Flamme. Von noch größerer Bedeutung ist, daß bei der katalytischen Umsetzung eine weitgehende Ausschaltung der Bildung unerwünschter Verbrennungsbestandteile, beispielsweise von Stickoxiden, möglich ist, die sich ansonsten in der freien Flamme bei Temperaturen oberhalb von 1330°C zwangsweise bilden würden.

Ein Gerät etwa der eingangs genannten Art, welches als Spaltgasgenerator ausgebildet ist (FR-A-2 347 430), weist im Zentrum eine Reaktionskammer mit einer vorgeschalteten Mischkammer auf, in die Luft und Brennstoff geführt werden. Am Eingang zur Reaktionskammer ist ein poröser Keramikblock angeordnet, der mit einer Vielzahl von Durchgangskanälen versehen ist. Mit diesem Keramikblock ist ein Katalysator verbunden, und beide sind von Durchströmkanälen für die Reaktionsbestandteile durchsetzt. Der Keramikblock hat die Funktion, vor erhöhten Temperaturen zu schützen, die in der Reaktionszone vorherrschen, während sich das reaktive Gemisch in der Mischkammer befindet. Allerdings liefert bei dieser bekannten Vorrichtung die Mischkammer selbst keinen Beitrag zur Flammenabsperrung.

Weiter ist eine Mischvorrichtung bekannt (US-A-2 357 673), welche eine Venturi-Düse zum ausschließlichen Mischen von Luft und Brennstoff aufweist. Allerdings erfolgt der Mischvorgang nach dem Querstromprinzip, wobei die Venturi-Düse keine weiteren Funktionen übernimmt. Der Brennstoff wird ausschließlich im ausgangsseitigen und somit zunehmend größer werdenden Bereich der Venturi-Düse in die Luft eingespritzt. Proportional hierzu nimmt die Strömungsgeschwindigkeit wieder ab. Die endgültig gewollte Mischung läßt sich erst in der eigentlichen Mischkammmer, welche der Venturi-Düse nachgeschaltet ist, erhalten, indem entsprechend dem Zusammensetzungsverhältnis des Brennstoff-Luft-Gemisches aus einem Ansaugraum zusätzliche Luft eingebracht wird.

Nach alledem liegt der Erfindung die Aufgabe zugrunde, ein Brennwertgerät mit den eingangs genannten Merkmalen so auszugestalten, daß die Flammensperre einfacher und wirksamer erreicht werden kann, und daß die Gefahr des Auftretens von Stickoxiden noch weiter vermindert ist. Zur Lösung dieser Aufgabe wird erfindungsgemäß vorgeschlagen, daß die Flammensperre eine nach Art einer Venturi-Düse aufgebaute Mischvorrichtung für Luft und Kohlenwasserstoff umfaßt, die derart ausgebildet ist, daß die Zufuhrleitung für das eine Medium - insbesondere für den Kohlenwasserstoff - im Gegenstrom in die Düse einragt und mit ihrem offenen Ende der Strömungsrichtung des anderen Mediums entgegengerichtet ist.

Die Erfindung geht dabei von der Erkenntnis aus, daß eine derarige Luftmischvorrichtung eine laminare langsame Strömung im Bereich vor dem katalytisch beschichteten Keramikkörper und damit das Auftreten einer offenen Flamme außerordentlich wirksam verhindern kann. Die überraschende Wirksamkeit der Luftmischvorrichtung für sich als Flammensperre, und zwar nicht nur vor der zweiten Verbrennungsstufe, bei der im wesentlichen Spaltgas vorliegt, sondern sogar vor der ersten Verbrennungsstufe, bei der es darum geht, ein reines Kohlenwasserstoff-Luft-Gemisch an einer Umsetzung in einer offenen Flamme vor dem Keramikkörper zu hindern, war ein überraschendes Ergebnis umfänglicher Untersuchungen von Brennwertgeräten.

Nach einer zweckmäßigen Weiterbildung ist in der Düse vor dem offenen Ende der Zuführleitung des einen Mediums ein Prallblech angeordnet. Dabei soll verhindert werden, daß der Brennstoff durch die Düse hindurchgepreßt wird. Vielmehr soll er im Bereich der Düse durch die entgegenkommende Luft mitgerissen werden. Die Auswahl, welche Leitung im Gegenstrom einragt, ergibt sich im wesentlichen daraus, welche Kompente des herzustellenden Gemisches weniger Volumen aufweist und damit leichter durch das die Venturi-Düse durchströmende andere Gas mitgerissen werden kann.

Ganz besonders einfach kann die Venturidüse wiederum durch eine auf eine Querwand des Gehäuses mit einer zentralen Öffnung aufgesetzte konkavgewölbte Trichterplatte ausgebildet sein. Diese Ausbildung ergibt eine überall glatte Flächen aufweisende Düse, bei der nirgends ein Stau und damit auch keine langsamen Strömungen entstehen können, die zu einer offenen Verbrennung in einer Flamme führen könnten.

Zur weiteren Verbesserung eines derartigen Brennwertgeräts in dem Sinn, daß unter allen Umständen und unabhängig von der Durchsatzmenge ein Flammenrückschlag wirksam verhindert ist, kann in weiterer Ausgestaltung der Erfindung vorgesehen sein, daß in dem sich konisch erweiternden Ausströmabschnitt der Düse eine federbelastete Drossel angeordnet ist.

Im einfachsten Fall kann eine solche Drossel ein rotationssymmetrischer, sich nach beiden Enden hin verjüngender Körper sein, der auf einem zur Düse konzentrisch an Querarmen befestigten Bolzen gelagert gegen die Strömungsrichtung unter Wirkung einer den Bolzen umgebenden Druckfeder steht, wobei die Vorspannung der Feder bevorzugt ebenfalls nach den jeweiligen Bedingungen einstellbar sein sollte.

Durch die erfindungsgemäße federbelastete Drossel ergibt sich eine selbsttätige Regulierung des Strömungsquerschnitts dahingehend, daß verhindert wird, daß die Strömungsgeschwindigkeit des Brennstoff-Luft-Gemisches einen vorgegebenen Minimalwert, der unbedingt vorhanden sein muß, um einen Flammenrückschlag wirksam zu verhindern, unterschreitet. Damit kann - im Gegensatz zu einfachen Düsenanordnungen - ein Brennwertgerät mit einer derartigen Mischvorrichtung problemlos über den gesamten Leistungsbereich durchgeregelt werden, d.h. man kann von der katalytischen Verbrennung sehr kleiner Brennstoffmengen bis zur Maximalumsetzleistung des Gerätes eine stufenlose Regelung lediglich durch Änderung der Brennstoff- und der damit gekoppelten Luftzufuhr erreichen, ohne daß gleichzeitig Probleme mit dem Flammenrückschlag entstehen können.

Eine ganz bevorzugte Ausführungsform eines Brennwertgeräts ist gekennzeichnet durch eine zweistufige Ausbildung mit einer ersten Primär-Luftzuführung über die dem der ersten Stufe zugeführten Kohlenwasserstoff-Luft-Gemisch nur ein Teil der zur vollständigen Verbrennung notwendigen Luft beigemischt wird und eine zwischen einem Ausgangswärmetauscher der ersten Stufe und gegebenenfalls einem Eingangswärmetauscher der zweiten Stufe einmündende zweite Sekundär-Luftzuführung zur Verhinderung des Auftretens von oberhalb etwa 1300°C liegenden Verbrennungstemperaturen.

Die Zweistufigkeit in Verbindung mit dem der ersten Stufe nachgeschalteten Wärmetauscher zur erheblichen Absenkung der Temperatur läßt es nämlich zu, daß eine quantitative Umsetzung des Brennstoffs erfolgt, ohne daß dabei oberhalb der Grenztemperatur von etwa 1300°C liegende Umsetztemperaturen auftreten, bei denen dann, wie es etwa bei der Anordnung nach der Offenlegungsschrift 28 41 105 der Fall ist, bei der Temperaturen von etwa 1740°C auftreten, im großen Umfang Stickoxide erzeugt werden müssen.

Schließlich liegt es auch noch im Rahmen der Erfindung, in den verschiedenen Stufen unterschiedliche Anzahlen der keramischen Lochplatten keramisch beschichtet auszubilden.

Ausgehend von beispielsweise der Zahl von vier keramischen Lochplatten, die in Abstand hintereinander angeordnet sind, hat es sich als vorteilhaft erwiesen, in der ersten Stufe lediglich die letzte Platte mit einer keramischen Oberflächenbeschichtung zu versehen, während in der zweiten Stufe die beiden letzten Platten katalytisch beschichtet sind. Jeweils vor diesen katalytisch beschichteten Platten ist dann die Zündvorrichtung zum Starten einer Verbrennung angeordnet.

Weitere Vorteile, Merkmale und Einzelheiten der Erfindung ergeben sich aus der nachfolgenden Beschreibung einiger Ausführungsbeispiele sowie anhand der schematischen Zeichnungen. Dabei zeigen:

Fig. 1    einen schematischen Schnitt durch ein Brennwertgerät mit zwei Stufen I und II,

Fig. 2    einen vergrößerten Schnitt längs der Linie II-II in Fig. 3 durch eine abgewandelte erfindungsgemäße Mischkammer für das Brennwertgerät und

Fig. 3    eine Aufsicht auf die abgewandelte Mischkammer nach Fig. 2.

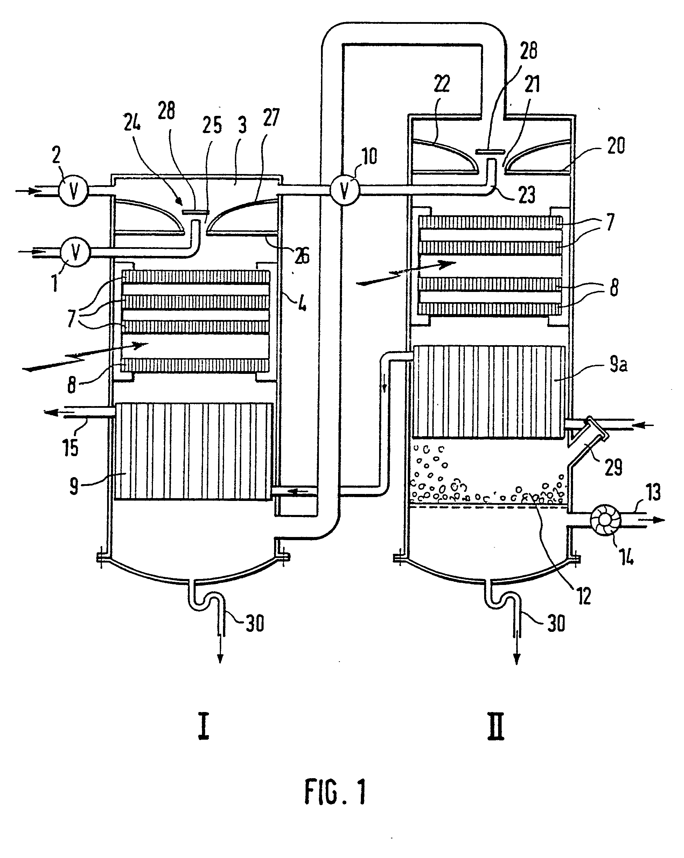

Die Fig. 1 zeigt schematisch ein Brennwertgerät mit zwei Stufen I und II, die im dargestellten Ausführungsbeispiel zwar hintereinander geschaltet, aber nebeneinander angeordnet sind. Bei 1 ist die Brennstoffzuführleitung, beispielsweise ein Dosierventil zur Zuführung von Erdgas angedeutet, während 2 die Luftzuführung bezeichnet. Im oberen Teil 3 des Gehäuses 4 ist zur Erzielung einer homogenen Erdgas-Luftmischung - und gemäß dem speziellen Merkmal der vorliegenden Erfindung zur Erzielung einer Flammensperre - eine besondere Mischeinrichtung 24 vorgesehen, die nach Art einer Venturidüse ausgebildet ist. Dabei ragt die Brennstoffzuführleitung 1 im Gegenstrom in den Bereich der Düse 25 ein, die durch eine Querwand 26 mit einer auf deren zentrale Öffnung aufgesetzten konkav gewölbten Trichterplatte 27 ausgebildet ist. Mit 28 ist schematisch eine Prallplatte oder dergleichen angedeutet, die verhindert, daß das Brenngas aus dem Bereich der Venturidüse herausgedrückt wird und sicherstellt, daß es durch seitlichen Austritt von der die Düsenöffnung 25 durchströmende Luft mitgerissen wird.

Dabei ist sichergestellt, daß in der Mischvorrichtung 24 dem Brenngas nur ein Teil des zur vollständigen Umsetzung notwendigen Sauerstoffs zugeführt wird, damit in der ersten Stufe I des Brennwertgeräts nur ein Teil des Brennstoffs verbrennt, während der übrige im wesentlichen zu Spaltgas umgesetzt wird. Diese unvollständige Verbrennung ist in Verbindung mit der durch die Flammensperre erzwungenen Umsetzung im Inneren einer katalytisch beschichteten keramischen Lochplatte verantwortlich dafür, daß keine unerwünschten Verbrennungsstoffe, insbesondere keine störenden Stickoxide gebildet werden. Der Beitrag der Teilverbrennung in der ersten Stufe ergibt sich dabei in sehr einsichtiger Weise dadurch, daß durch diese nur teilweise Verbrennung auch entsprechend geringere Verbrennungstemperaturen erzielt werden, so daß an keiner Stelle des Systems Temperaturen in der Gegend von 1300°C erreicht werden. Bei diesen Temperaturen erfolgt nämlich zwangsläufig eine erhebliche Erzeugung von Stickoxiden.

Der Keramikkörper besteht aus teilweise nicht beschichteten keramischen Lochplatten 7 und katalytisch oberflächenbeschichteten keramischen Lochplatten 8. Eine Besonderheit der dargestellten Ausführungsform eines Brennwertgeräts besteht dabei darin, daß die Zahl der nicht beschichteten keramischen Lochplatten im Verhältnis zur Zahl der beschichteten in den beiden Stufen I und II unterschiedlich groß ist. In der ersten Stufe sind drei nicht beschichtete keramische Lochplatten 7 angeordnet, denen nur eine keramisch beschichtete Platte 8 nachgeschaltet ist, wobei zwischen der dritten und vierten Lochplatte die Zündvorrichtung zum Starten der Verbrennung angeordnet ist. Diese ist der besseren Übersichtlichkeit halber im vorliegenden Ausführungsbeispiel nur durch einen blitzartig gezackten Pfeil angedeutet. In der zweiten Stufe II sind zwei ohne katalytische Oberflächenbeschichtung ausgebildete Lochplatten 8 vorgesehen. In diesem Fall ist also dann die Zündvorrichtung zwischen der zweiten und dritten Lochplatte angeordnet.

Jeweils am Ausgang der einzelnen Stufen I und II sind Wärmetauscher 9 und 9a angeordnet. Dabei erkennt man, daß unmittelbar im oberen Teil 3 des Gehäuses 4 der ersten Stufe ein Teil der Luft abgezweigt und über ein Dosierventil 10 der Luftzuführleitung 23 zugeführt wird, die im Gegenstrom in die Düsenöffnung 21 einer Venturidüse aus einer Querwand 20 des Gehäuses der zweiten Stufe und einer aufgesetzten konkav gewölbten Trichterplatte 22 einragt.

Bei 29 erkennt man eine Nachfüllöffnung zum Einfüllen von Kalksteinstücken, die der Entschwefelung des Rauchgases im Abscheider 12 dienen. Jede der beiden Stufen I und II ist, bei 30 angedeutet, mit einem Kondensatablauf versehen. Bei 14 ist wiederum der Ventilator andeutungsweise zu erkennen, der in die zum Kamin führende Abgasleitung eingeschaltet ist.

Die selbstverständlich auch im vorliegenden Fall zusätzlich vorgesehenen Dosiereinrichtungen und die besondere Ausbildung der Regelvorrichtung sind im einzelnen nicht dargestellt.

Ein erfindungsgemäßes Brennwertgerät mit - oder ohne die vorstehend beschriebene verbesserte Flammensperre - läßt sich neben der bislang bevorzugt beschriebenen Verwendung als zweistufiges Brennwertgerät für Gebäudeheizungen auch für eine Reihe weiterer Einsatzzwecke mit Vorteil verwenden.

Beispielsweise kann ein derartiges Brennwertgerät sehr günstig in einer einstufigen Ausführungsform zur Verbrennung von Gasen mit niedrigem Heizwert, insbesondere von Gichtgas, eingesetzt werden. Bei derartigen Gasen ist nämlich die zweistufige Aufteilung zur Verhinderung des Auftretens übermäßiger Temperaturen und der dabei auftretenden Bildung von Stickoxiden nicht erforderlich, sondern man arbeitet quasi nur mit der zweiten Stufe des vorstehend beschriebenen zweistufigen Brennwertgeräts, dem anstelle des aus der ersten Stufe austretenden Spaltgases unmittelbar das bei Industrieprozessen, beispielsweise in Hochöfen, anfallende Gichtgas zugeführt wird.

Darüber hinaus läßt sich auch ein sehr wirtschaftlich arbeitender keramischer Ofen mit Hilfe eines erfindungsgemäßen Brennwertgeräts realisieren, wobei das Brennwertgerät allerdings ohne den vorstehend beschriebenen ausgangsseitigen Wärmetauscher verwendet wird. Dabei dient das Brennwertgerät als Brennstoffumwandler, wobei die austrittsseitige Katalysatorplattenoberfläche in Richtung des zu heizenden Gegenstandes weist und das austretende Generatorgas in einer weich brennenden Flamme verbrannt wird. Es erfolgt also anstelle der Verbrennung des Generatorgases in einer zweiten Stufe eine unmittelbare Verbrennung des Generatorgases beim Austritt aus der ersten Stufe des Brennwertgeräts.

Schließlich kann ein erfindungsgemäßes Brennwertgerät auch für eine Vorrichtung zum Betreiben eines Gasbrenners, insbesondere eines Verbrennungsmotors, mit geringwertigem Benzin, Öl oder dergl. eingesetzt werden. Zu diesem Zweck wird der geringwertige Flüssigtreibstoff, beispielsweise octanarmes Benzin oder Öl, einem erfindungsgemäßen Brennwertgerät zugeführt, welches so betrieben wird - was durch die Luft- oder Sauerstoffzufuhr und die jeweilige Arbeitstemperatur regelbar ist - daß der Brennstoff weitestgehend zu einem Brenngas umgesetzt wird und allenfalls ein geringer Teil des Flüssigbrennstoffs katalytisch verbrannt wird, um die katalytische Umsetzung aufrechtzuerhalten. Die Aufrechterhaltung der notwendigen Umsetztemperatur kann dabei in Weiterbildung der Erfindung aber auch, zumindest teilweise, dadurch erfolgen, daß die Abgase des dem als Spaltvergaser arbeitenden Brennwertgeräts nachgeschalteten Gasbrenners über einen Wärmetauscher od.dgl. zur Erwärmung des Katalysators und des Brennstoffs herangezogen werden.

Durch eine derartige Umsetzung, insbesondere wenn sie so gesteuert wird, daß als Gaskomponente auch Methan erzeugt wird, erreicht man, daß aus einem für den Einsatz in Verbrennungsmotoren unbrauchbaren Brennstoff mit sehr niedriger Octanzahl ein Brenngas entsteht, welches einer Octanzahl von ca. 110 entspricht, so daß also mit einfachem Aufwand ein Kraftfahrzeug durch Vorschalten einer erfindungsgemäßen Brennwertstufe mit billigsten Treibstoffen, beispielsweise sogar Sonnenblumenöl, betrieben werden könnte, obgleich der eigentliche Verbrennungsmotor auf die Verarbeitung von Brennstoffen mit höchsten Octanzahlen ausgelegt ist.

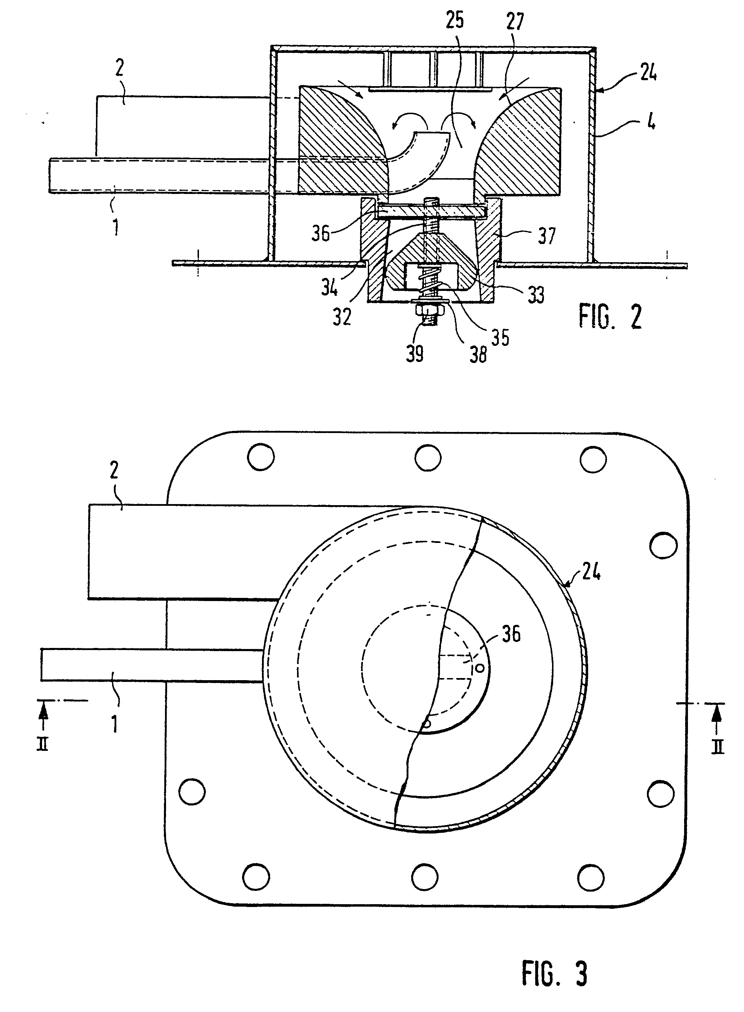

Die Figuren 2 und 3 zeigen eine abgewandelte Ausbildung der Mischkammer, die insgesamt mit dem Bezugszeichen 24 versehen ist. Diese Mischkammer 24 umfaßt das Gehäuse 4, in welches eine Luftzufuhrleitung 2 und eine Brennstoffzuführleitung 1 einmünden. Diese Leitungen können im übrigen auch gegeneinander vertauscht sein. Die wiederum nach Art einer Venturidüse aufgebaute Mischvorrichtung umfaßt einen Einführtrichter 27, in welchen die Luft von der Zuführleitung 2 am Umfang unter zusätzlicher Erzielung eines zirkular strömenden Wirbels eingeblasen wird.

Der allgemeinen Strömungsrichtung der Luft durch die Düse 25 entgegen ragt das abgewinkelte Ende der Brennstoffzufuhrleitung 1 ein, durch die flüssiger oder insbesondere gasförmiger Brennstoff (Erdgas) dem Luftstrom entgegen in den Düsenbereich eingestrahlt und damit verwirbelt wird. Im konisch sich erweiternden Ausströmabschnitt 32 der Düse ist eine Drossel auf einem zur Düse konzentrischen Bolzen 34 gelagert, die unter der Wirkung einer Wendeldruckfeder 35 steht, die die Drossel nach oben in den Bereich des abnehmenden Querschnitts des Ausströmabschnitts drückt. Je nach der Menge des der Düse 25 zugeführten Brennstoff-Luft-Gemisches wird die Drossel 33 gegen die Wirkung der Feder 35 mehr oder weniger stark nach unten gedrückt, so daß sich automatisch ein Strömungsquerschnitt zwischen der Drossel und der Innenwand des Ausströmabschnitts einstellt, bei dem die darin auftretende Strömungsgeschwindigkeit einen vorgegebenen Minimalwert auf jeden Fall übersteigt. Diese Selbsteinregulierung auf einen Mindestwert der Strömungsgeschwindigkeit des Brennstoff-Luft-Gemisches durch selbsttätige Verstellung des Strömungsquerschnittes je nach anfallender Menge des Brennstoff-Luft-Gemisches verhindert unter allen Betriebsbedingungen wirksam ein Zurückschlagen der Flammen im Brennraum unterhalb des Ausströmabschnitts 27 der Mischkammer.

Die Befestigung des Lagerbolzens 34 erfolgt mit Hilfe eines Querträgers 36, an dem der Bolzen befestigt ist und seinerseits zwischen dem den Ausströmabschnitt der Düse bildenden Rohr 37 und dem die Trichterplatte 27 umfassenden oberen Teil verklemmt ist. Die Drossel 33 wird dabei durch einen rotationssymmetrischen, sich nach beiden Enden hin verjüngenden Körper aus beispielsweise Stahl oder Keramik gebildet. Durch die gegen eine Widerlagerscheibe 38 für die Feder 35 verstellbare, auf dem Gewindeabschnitt des Lagerbolzens 34 sitzende Mutter 39 kann dabei die Vorspannung der Feder 35 verstellt werden.

## Patentansprüche

1. Brennwertgerät für Kohlenwasserstoffe mit einem mit einer katalytischen Oberflächenbeschichtung versehenen, von einem Kohlenwasserstoff-Luft-Gemisch durchsetzten porösen Keramikkörper, insbesondere in Form einer keramischen Lochplatte (9) sowie einem ausgangsseitig angeordneten Wärmetauscher (15), wobei dem katalytisch beschichteten Keramikkörper (8) ein katalytisch unbeschichteter Keramikkörper (7) als Flammensperre vorgeschaltet ist, die unter Verhinderung einer Verbrennung des Kohlenwasserstoff-Luft-Gemisches vor der Oberfläche des Keramikkörpers eine weitestgehende flammenlose Umsetzung des Gemisches bewirkt, dadurch gekennzeichnet, daß die Flammensperre eine nach Art einer Venturi-Düse aufgebaute Mischvorrichtung (24) für Luft und Kohlenwasserstoff umfaßt, die derart ausgebildet ist, daß die Zufuhrleitung (1, 23) für das eine Medium - insbesondere für den Kohlenwasserstoff - im Gegenstrom in die Düse (25, 21) einragt und mit ihrem offenen Ende der Strömungsrichtung des anderen Mediums entgegengerichtet ist.

2. Brennwertgerät nach Anspruch 1, dadurch gekennzeichnet, daß in der Düse (25, 21) vor dem offenen Ende der Zufuhrleitung (1, 23) des einen Mediums ein Prallblech (28) angeordnet ist.

3. Brennwertgerät nach Anspruch 1 oder 2, dadurch gekennzeichnet, daß die Venturidüse (25, 21) durch eine auf eine Querwand (26, 20) des Gehäuses (4) mit einer zentralen Öffnung aufgesetzten konkav gewölbten Trichterplatte (27, 22) gebildet ist.

4. Brennwertgerät nach einem der Ansprüche 1 bis 3, dadurch gekennzeichnet, daß in dem sich konisch erweiternden Ausströmabschnitt (32) der Düse (35) eine federbelastete Drossel (33) zur Regelung des Strömungsquerschnittes angeordnet ist.

5. Brennwertgerät nach Anspruch 4, dadurch gekennzeichnet, daß die Drossel (33) ein rotationssymmetrischer, sich nach beiden Enden verjüngender Körper ist, der auf einem zur Düse (25) konzentrisch an Querarmen (36) befestigten Bolzen (34) gelagert gegen die Strömungsrichtung unter Wirkung einer den Bolzen (34) umgebenden Druckfeder (35) steht.

6. Brennwertgerät 4 oder 5, dadurch gekennzeichnet, daß die Vorspannung der Druckfeder (35) einstellbar ist.

7. Brennwertgerät nach einem der Ansprüche 1 bis 6, gekennzeichnet durch eine zweistufige Ausbildung mit einer ersten Primär-Luftzuführung (2), über die dem der ersten Stufe (I) zugeführten Kohlenwasserstoff-Luft-Gemisch nur ein Teil der zur vollständigen Verbrennung notwendigen Luft beigemischt wird und eine zwischen einem Ausgangswärmetauscher (9) der ersten Stufe (I) und ggf. einem Eingangswärmetauscher (9a) der zweiten Stufe (II) einmündende zweite Sekundär-Luftzuführung (10) zur Verhinderung des Auftretens von oberhalb etwa 1300°C liegenden Verbrennungstemperaturen.

8. Brennwertgerät nach Anspruch 7, dadurch gekennzeichnet, daß in den verschiedenen Stufen (I, II) unterschiedliche Anzahlen der keramischen Lochplatten (7, 8) katalytisch beschichtet sind.

9. Brenner zur Verbrennung von Gasen mit niedrigem Heizwert, insbesondere von Gichtgas, dadurch gekennzeichnet, daß das Gas flammenlos in einem einstufigen Brennwertgerät nach einem der Ansprüche 1 bis 6 umgesetzt wird.

10. Einstufiges Brennwertgerät nach einem der Ansprüche 1 bis 6 ohne einem ausgangsseitig angeordneten Wärmetauscher, gekennzeichnet durch seine Verwendung als Brennstoffumwandler in einem keramischen Ofen, wobei die austrittsseitige Katalysatorplattenoberfläche in Richtung des zu heizenden Gegenstandes weist und das austretende Generatorgas zwischen Katalysatorplattenoberfläche und zu beheizendem Gegenstand in einer weich brennenden Flamme verbrannt wird.

11. Einstufiges Brennwertgerät nach einem der Ansprüche 1 bis 6, gekennzeichnet durch seine Verwendung als Vergaser für flüssige Kohlenwasserstoffe zum Betrieb eines Verbrennungsmotors.

12. Vorrichtung nach Anspruch 11, dadurch gekennzeichnet, daß die Erwärmung des Katalysators und des Brennstoffs auf Umsetzungstemperaturen von ca. 400 bis 800°C zumindest teilweise über die Abgase des Gasbrenners erfolgt.

**Claims**

1. A combustion device for hydrocarbons, having a porous ceramic member, particularly in the form of a perforated ceramic plate (9), which is provided with a catalytic surface coating and traversed by a mixture of hydrocarbon and air, as well as a heat exchanger (15) disposed at the output side, the catalytically coated ceramic member (8) being preceded by a catalytically uncoated ceramic member (7) as a flame arrester which, while preventing combustion of the mixture of hydrocarbon and air in front of the surface of the ceramic member, causes a largely flameless conversion of the mixture, characterised in that the flame arrester comprises a mixing device (24) for air and hydrocarbon, which device is constructed in the manner of a Venturi tube and is constructed in such a manner that the feed pipe (1, 23) for the one medium - particularly for the hydrocarbon - projects into the tube (25, 21) in counter-current and is directed with its open end counter to the direction of flow of the other medium.

2. A combustion device according to Claim 1, characterised in that a baffle plate (28) is disposed in the tube (25, 21) in front of the open end of the feed pipe (1, 23) for the one medium.

3. A combustion device according to Claim 1 or 2, characterised in that the Venturi tube (25, 21) is formed by a concavely curved funnel plate (27, 22) which is placed with a central opening on a partition (26, 20) of the housing (4).

4. A combustion device according to any one of Claims 1 to 3, characterised in that a springloaded throttle (33) is disposed in the outflow portion (32) of the tube (35) widening out conically, in order to control the cross-section of flow.

5. A combustion device according to Claim 4, characterised in that the throttle (33) is an axially symmetrical member which becomes narrower at both ends and which, mounted on a bolt (34) secured to transverse arms (36) concentrically with the tube (25), is subject to the action counter to the direction of flow, of a compression spring (35) surrounding the bolt (34).

6. A combustion device according to Claim 4 or 5, characterised in that the initial stress of the compression spring (35) is adjustable.

7. A combustion device according to any one of Claims 1 to 6, characterised by a two-stage construction with a first primary air supply (2) through which only some of the air necessary for the complete combustion is admixed with the mixture of hydrocarbon and air supplied to the first stage (I), and a second secondary air supply (10) discharging between an output heat exchanger (9) of the first stage (I) and possibly an input heat exchanger (9a) of the second stage (II), to prevent the appearance of combustion temperatures above about 1300°C.

8. A combustion device according to Claim 7, characterised in that different numbers of the ceramic perforated plates (7, 8) are catalytically coated in the various stages (I, II).

9. A burner for the combustion of gases with a low calorific value, particularly blast-furnace gas, characterised in that the gas is converted flamelessly in a single-stage combustion device according to any one of Claims 1 to 6.

10. A single-stage combustion device according to any one of Claims 1 to 6 without a heat exchanger disposed at the output side, characterised by its use as a fuel converter in a ceramic kiln, wherein the surface of the catalytic plate at the outlet side faces in the direction of the object to be heated and the emerging producer gas is burnt in a gently burning flame between the surface of the catalytic plate and the object to be heated.

11. A single-stage combustion device according to any one of Claims 1 to 6, characterised by its use as a carburettor for liquid hydrocarbons for the operation of an internal combustion engine.

12. A device according to Claim 11, characterised in that the heating of the catalyst and of the fuel to conversion temperatures of about 400 to 800°C is effected at least partially via the waste gases of the gas burner.

## Revendications

1. Dispositif de combustion pour des carbures d'hydrogène comportant un corps en céramique poreux pourvu d'un revêtement de surface catalytique, et traversé par un mélange hydrocarbure-air et se présentant notamment sous la forme d'une plaque céramique perforée (9), ainsi qu'un échangeur de chaleur (15) monté sur le côté sortie, et dans lequel en amont du corps céramique (8) pourvu du revêtement catalytique se trouve disposé un corps céramique (7) non pourvu d'un revêtement catalytique, qui constitue un dispositif anti-retour de flamme et réalise une conversion du mélange hydrocarbure-air, dans une très large mesure sans flamme, tout en empêchant une combustion du mélange hydrocarbure-air en amont de la surface du corps céramique, caractérisé en ce que le dispositif anti-retour de flamme comporte un dispositif mélangeur (24) pour l'air et l'hydrocarbure, agencé sous la forme d'une buse à venturi et conçu de telle sorte que la canalisation d'amenée (1, 23) prévue pour un premier milieu - notamment pour l'hydrocarbure - pénètre à contre-courant dans la buse (25, 21) et est dirigée, par son extrémité ouverte, en sens opposé de la direction d'écoulement de l'autre milieu.

2. Dispositif de combustion selon la revendication 1, caractérisé en ce qu'une chicane (28) est disposée dans la buse (25, 21) en amont de l'extrémité ouverte de la canalisation d'amenée (1, 23) prévue pour le premier milieu.

3. Dispositif de combustion selon la revendication 1 ou 2, caractérisé en ce que la buse à venturi (25, 21) est formée par une plaque formant entonnoir (27, 22) cintrée avec une forme concave et montée sur une paroi transversale (26, 20) de l'enveloppe (4) comportant une ouverture centrale.

4. Dispositif de combustion selon l'une des revendications 1 à 3, caractérisé en ce qu'un papillon d'étranglement (33), qui est chargé par un ressort et sert à régler la section transversale d'écoulement, est disposé dans la section de sortie (32) de la buse (35), qui s'élargit avec une forme conique.

5. Dispositif de combustion selon la revendication 4, caractérisé en ce que le papillon d'étranglement (33) est un corps à symétrie de révolution, qui se rétrécit en direction de ses deux extrémités et qui, monté sur une tige filetée (34) fixée sur des bras transversaux (36), d'une manière concentrique à la buse (25), est soumis, à l'encontre de la direction d'écoulement, à l'action d'un ressort de pression (35) entourant la tige filetée (34).

6. Dispositif de combustion selon la revendication 4 ou 5, caractérisé en ce que la précontrainte du ressort de pression (35) est réglable.

7. Dispositif de combustion selon l'une des revendications 1 à 6, caractérisé par une réalisation à deux étages comportant une première amenée d'air primaire (2), au moyen de laquelle seule une partie de l'air nécessaire pour obtenir la combustion complète est introduite dans le mélange hydrocarbure-air envoyé au premier étage (I), et une seconde amenée d'air secondaire (10), qui débouche entre un échangeur de chaleur de sortie (9) du premier étage (I) et éventuellement un échangeur de chaleur d'entrée (9a) du second étage (II) et sert à empêcher l'apparition de températures de combustion supérieures à environ 1300°C.

8. Dispositif de combustion selon la revendication 7, caractérisé en ce que des nombres différents de plaques céramiques perforées (7, 8) sont pourvus d'un revêtement catalytique, dans les différents étages (I, II).

9. Brûleur servant à réaliser la combustion de gaz possédant un faible pouvoir calorifique, notamment du gaz de hauts fourneaux, caractérisé en ce que le gaz est converti sans flamme dans un dispositif de combustion à un étage selon l'une des revendications 1 à 6.

10. Dispositif de combustion à un étage selon l'une des revendications 1 à 6, ne comportant aucun échangeur de chaleur, sur son côté sortie, caractérisé par son utilisation en tant que dispositif de transformation de combustible dans un four céramique, la surface des plaques de catalyseur, situées du côté sortie, étant tournée dans la direction de l'objet à chauffer, tandis que le gaz de gazogène sortant est brûlé en fournissant une flamme à combustion douce, entre la surface des plaques de catalyseur et l'objet à chauffer.

11. Dispositif de combustion à un étage selon l'une des revendications 1 à 6, caractérisé par son utilisation en tant que gazéificateur pour des hydrocarbures liquides, pour le fonctionnement d'un moteur à combustion interne.

12. Dispositif selon la revendication 11, caractérisé en ce que l'échauffement du catalyseur et du combustible à des températures de conversion d'environ 400 à 800°C s'effectue au moins en partie par l'intermédiaire des gaz d'échappement du brûleur à gaz.

FIG. 1

25    27

2

24

4

1

36      37

34            33

32

39    38    35

FIG. 2

2

1

24

36

II

II

FIG. 3